# FASCICULE DE BREVET EUROPEEN

(11) **EP 3 648 490 B1**
(45) Date de publication et mention de la délivrance du brevet: **15.03.2023**
(21) Numéro de dépôt: 19205402.1
(22) Date de dépôt: 25.10.2019
(51) Int. Cl.: H04W 12/42, H04W 12/45, H04W 8/18, H04W 88/06

(54) **GESTION DE PROFILS D'ABONNE SIMULTANEMENT ACTIFS DANS UNE CARTE EUICC EN UTILISANT PLUSIEURS LIAISONS DISTINCTES**
VERWALTUNG VON GLEICHZEITIG AKTIVEN TEILNEHMERPROFILEN AUF EINER EUICC-KARTE DURCH NUTZUNG MEHRERER VERSCHIEDENER VERBINDUNGEN
MANAGEMENT OF SUBSCRIBER PROFILES SIMULTANEOUSLY ACTIVE IN AN EUICC CARD USING A PLURALITY OF SEPARATE LINKS

(30) Priorité: 30.10.2018 FR 1860059
(43) Date de publication de la demande: 06.05.2020
(73) Titulaire: IDEMIA France, 92400 Courbevoie (FR)
(72) Inventeur: DOS SANTOS, Elder, 92400 Courbevoie (FR); DUMOULIN, Jérôme, 92400 Courbevoie (FR); ESTEBAN, Jean-Michel, 92400 Courbevoie (FR); SOHIER, Sébastien, 92400 Courbevoie (FR); MICHEL, Alexis, 94490 Ormesson-Sur-Marne (FR)
(74) Mandataire: Idemia

(56) Documents cités:
- EP-A1- 2 026 240
- FR-A1- 3 046 011
- US-A1- 2014 220 952
- US-A1- 2015 350 879
- "Smart Cards; UICC - Contactless Front-end (CLF) Interface; Host Controller Interface (HCI) (Release 12)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP TEC, no. V12.0.0, 1 octobre 2013 (2013-10-01), XP014157437,

## Description

### DOMAINE DE L'INVENTION

La présente invention concerne des éléments sécurisés utilisés dans des terminaux hôtes d'utilisateur, et s'intéresse plus particulièrement à la gestion et au contrôle d'une multitude de profils d'abonné simultanément actifs pour permettre à l'utilisateur d'accéder à un réseau de téléphonie mobile.

### CONTEXTE DE L'INVENTION

Les éléments sécurisés traditionnellement utilisés pour s'authentifier sur les réseaux de téléphonie mobiles incluent les cartes de circuit intégré universelles UICC (pour « Universal Integrated Circuit Card »), notamment les cartes SIM (pour « Subscriber Identity Module » - ou module d'identité d'abonné). Chaque carte comprend des données de souscription, par exemple un identifiant IMSI (pour « International Mobile Subscriber Identity »), des clés cryptographiques et des algorithmes, spécifiques à un abonnement fourni par un opérateur de téléphonie mobile.

Des terminaux multi-SIM (généralement deux SIM auquel cas on parle de terminal DUAL SIM) ont vu le jour permettant, à leurs utilisateurs, de disposer et donc d'utiliser simultanément et sans manipulation complexe, plusieurs abonnements. Chaque carte SIM est alors reliée par une liaison ISO (via les contacts de la carte SIM) au processeur bande de base (ou « baseband ») du terminal, de telle sorte que les deux cartes SIM sont gérées de façon distinctes, le processeur bande de base réalisant uniquement un routage des flux réseau correspondants.

Des cartes eUICC (pour embedded UICC - ou UICC intégrée) ont également vu le jour, lesquelles permettent une flexibilité plus grande dans la gestion des abonnements.

Les principales spécifications d'une carte eUICC sont définies par le groupe GSMA (pour « Global System for Mobile Communications Association ») dans le standard GSMA SGP.02 v3.2 intitulé « Remote Provisioning Architecture for Embedded UICC - Technical Spécification - Version 3.2» en date du 27 juin 2017. Un module eUICC est un élément matériel sécurisé, généralement de petite taille, pouvant être intégré dans un terminal mobile hôte afin de mettre en oeuvre les fonctions d'une carte SIM traditionnelle.

Les cartes eUICC sont en effet reprogrammables et permettent donc de charger, supprimer et mettre à jour plusieurs profils d'abonné (ou profils de communication) au sein de la même carte eUICC. Chaque profil d'abonné est contenu dans un conteneur sécurisé (noté ISD-P conformément au standard GSMA) qui contient, comme une carte SIM classique, les données permettant, lorsque le profil est actif, de s'authentifier auprès d'un réseau correspondant de téléphonie mobile pour accéder à un service (par exemple de voix ou de données).

En changeant le profil d'abonné actif dans la carte eUICC, il est possible de changer d'opérateur ou de modifier l'accès à des services associés (services voix et/ou de données par exemple).

Le standard GSMA n'autorise l'activation que d'un seul profil d'abonné à la fois. Aussi, l'activation d'un autre profil d'abonné conduit à la désactivation d'un profil d'abonné alors actif.

Une carte eUICC peut être intégrée au terminal hôte généralement par soudure et présente une unique liaison ISO avec le terminal hôte permettant de gérer et d'accéder au seul profil actif de la carte.

Cette situation n'est pas satisfaisante car elle ne permet pas de profiter pleinement de la multitude de profils d'abonné présents dans l'eUICC, comme c'est le cas dans un terminal DUAL SIM.

Une solution visant à partager l'unique liaison ISO entre plusieurs profils d'abonné, comme décrit dans le document FR 3 046 011, n'est également pas satisfaisante car elle requiert une gestion complexe des commandes APDU selon le protocole ISO 7816 afin de distinguer les différents flux de commandes correspondant à différents profils d'abonné actifs.

US2014220952 divulgue l'amélioration d'un téléphone pour prendre en charge plusieurs SIM, en utilisant des UICC virtuels (vUICC) sur eUICC. Deux ou plusieurs profils de MNO différents peuvent être actifs en même temps pour simuler un terminal "double ou multiple SIM".

US2015350879 divulgue UE avec plusieurs eSIM, par ex. intégré dans un eUICC. Le processeur dans l'UE sélectionne l'eSIM pour accéder aux structures et aux applications de la carte SIM sélectionnée ou pour activer/désactiver le contenu de l'eSIM. Plusieurs eSIM peuvent être activés sur un eUICC en utilisant plusieurs canaux logiques. Chaque canal logique peut sélectionner simultanément un MNO différent.

Il existe donc un besoin de solutions techniques pour faciliter la gestion de, et donc l'accès à, plusieurs profils actifs au sein d'une même carte eUICC, aux fins de tirer bénéfice des multiples avantages des terminaux multi-SIM (notamment de l'accessibilité simultanée à des services relevant de plusieurs profils).

### RESUME DE L'INVENTION

La présente invention vise à surmonter ces limitations.

La présente invention est définie par l'objet des revendications indépendantes.

Une idée de l'invention est de s'affranchir de la contrainte d'une unique patte physique de connexion ISO entre l'élément sécurisé, typiquement une carte eUICC, et le terminal hôte pour permettre un plus grand nombre de liaisons de communication.

Cela permet à l'élément sécurisé d'utiliser des canaux de communication distincts pour plusieurs profils actifs. Le terminal hôte, notamment son processeur bande de base, peut alors accéder aux profils actifs par des voies séparées et indépendantes. L'usage simultané de plusieurs profils d'abonné est ainsi rendu possible, sans nécessiter une gestion complexe au niveau des messages APDU.

Des caractéristiques optionnelles de modes de réalisation de l'invention sont définies dans les revendications dépendantes.

Selon un mode de réalisation, la pluralité de liaisons distinctes de communication comprend une unique liaison ISO conforme à la norme ISO 7816 (plus particulièrement ISO 7816-3 et 7816-4). Cette référence à une liaison classique ISO permet de conserver, pour au moins un profil actif, un fonctionnement classique. Les liaisons pour les autres profils actifs seront donc réalisées sur un ou des liens physiques différents.

Selon un mode de réalisation particulier, la pluralité de liaisons distinctes de communication comprend deux ou plus liaisons ISO conformes à la norme ISO 7816. Dans ce cas, l'invention permet de gérer et d'accéder à deux ou plus profils actifs de l'élément sécurisé selon des procédures classiques. L'élément sécurisé est cependant spécifique en ce que de nouvelles pattes physiques de connexion ISO sont ajoutées et le contrôleur d'interface de communication interne en tient compte pour router les flux de commandes vers les profils (ISD-P) appropriés. Il en est de même pour le processeur bande de base du terminal hôte.

Bien entendu, d'autres modes de réalisation s'appuient sur une ou plusieurs liaisons de communication autres que des liaisons ISO.

Selon un mode de réalisation particulièrement intéressant, la pluralité de liaisons distinctes de communication comprend au moins une liaison logique (ou *pipe*) établie au travers d'une interface de contrôleur d'hôte, HCl (pour « Host Controller Interface »), sur une liaison physique entre l'élément sécurisé et le terminal hôte. Cette interface HCl est notamment définie dans le document technique ETSI TS 102 622 V12.0.0, intitulé « Smart Cards; UICC-Contactless Front-end (CLF) Interface; Host Controller Interface (HCl) ».

La configuration proposée ici permet avantageusement d'adresser aisément un très grand nombre de profils actifs de l'élément sécurisé au travers d'un nombre limité de pattes physiques additionnelles (liaison physique) de connexion entre l'élément sécurisé et le terminal. En particulier, une pluralité (c'est-à-dire deux ou plus) de liaisons logiques établies au travers de l'interface HCl sur la liaison physique est associée à une pluralité respective de profils d'abonné actifs de l'élément sécurisé. Dans un mode de réalisation particulièrement efficace, l'interface HCl est mise en oeuvre sur le protocole (de couche ISO liaison de données) simple fil SWP (pour « Single Wire Protocol »), définie dans le document technique ETSI TS 102 613 V11.0.0, intitulé « Smart Cards; UICC - Contactless Front-end (CLF) Interface; Part 1: Physical and data link layer characteristics », entre le terminal hôte et l'élément sécurisé. On fait ici référence à la technologie SWP/HCl qui ne nécessite qu'une seule patte de connexion pour gérer simultanément plusieurs profils actifs de l'élément sécurisé.

Du côté terminal hôte, un contrôleur d'hôte de l'interface HCl est mis en oeuvre dans un module de gestion CLF (pour « Contact Less Front-end ») de communications sans contact, qui équipe classiquement des terminaux compatibles NFC (pour « Near Field Communication »),
et un processus hôte du processeur bande de base est configuré pour établir, pour un profil d'abonné actif, un tunnel (« pipe » selon la nomenclature HCl) avec un service (directement associé à une « gate » dans HCl) gérant le profil d'abonné actif dans l'élément sécurisé, via le module de gestion CLF agissant comme contrôleur d'hôte de l'interface HCl.

La présente invention tire ainsi profit de la flexibilité de l'interface HCl classiquement dévolue à des usages applicatifs autres que la gestion de profils d'abonné.

En variante à la technologie SWP/HCl, la pluralité de liaisons distinctes de communication peut comprendre une, deux ou plus liaisons logiques établies au travers d'une interface périphérique série SPI (ou liaisons SPI pour « Serial Peripheral Interface »). Ici encore, une entité maître dans le processeur bande de base est configurée pour établir une liaison maître-esclave pour chacun d'un ou plusieurs profils d'abonné actifs, avec une entité esclave dédiée prévue dans l'élément sécurisé.

D'autres variantes peuvent être envisagées telles que celles reposant sur l'utilisation d'un bus I2C (pour « Inter-Integrated Circuit ») ou de l'interface de communication I3C (pour « Improved Inter Integrated Circuit »).

Dans un mode de réalisation, une pluralité de services de communication (par exemple des portes HCl ou des services SPI) sont pré-assignés à une pluralité de ressources de communication (par exemple antennes ou ressource d'un multiplexage par une antenne) sur un ou plusieurs réseaux de téléphonie mobile, et lesdites liaisons distinctes de communication sont établies à partir des services de communication pré-assignés de sorte que chaque profil d'abonné actif soit associé à une ressource de communication respective. Cette disposition est avantageuse en ce que les opérations de routage des messages au niveau du terminal hôte (via le processeur bande de base) sont simplifiées : il y a une bijection entre chaque ressource de communication (sur laquelle il reçoit ou doit transmettre un message) et un service de communication avec l'élément sécurisé.

Dans ce cas, le contrôleur d'interface de communication est configuré pour, lors de l'activation d'un profil, instancier un service de communication et établir une liaison de communication entre le service instancié et un service pré-assigné du terminal hôte. Les services pré-assignés étant statiques, l'élément sécurisé peut les connaître à l'avance ou récupérer l'information auprès du terminal hôte à chaque occasion où un nouveau profil est activé.

Selon des modes de réalisation de l'invention, l'élément sécurisé est configuré pour activer simultanément (c'est-à-dire maintenir simultanément dans un état actif) plusieurs profils d'abonné gérés sous un même domaine de sécurité racine, connu sous la dénomination de ISD-R conformément au standard GSMA..Dans un mode de réalisation particulier, la pluralité de profils d'abonné présents dans l'élément sécurisé est gérée sous un seul domaine de sécurité racine, ISD-R. Un seul SM-SR (et donc intervenant) est alors nécessaire pour gérer les profils

En variante, la pluralité de profils d'abonné présents dans l'élément sécurisé est répartie sous la gestion de deux ou plus domaines de sécurité racines. L'élément sécurisé est ainsi partagé entre plusieurs propriétaires (« ownership » en langue anglo-saxonne), permettant de démultiplier les possibilités de profils pour l'utilisateur auprès de ces différents propriétaires.

Dans un mode de réalisation pluri-propriétaires, la pluralité de profils d'abonné présents dans l'élément sécurisé est répartie sous la gestion de deux ou plus domaines de sécurité racines, et l'élément sécurisé est configuré pour activer un seul profil d'abonné par domaine de sécurité racine à la fois. Dans cette configuration, la gestion des profils d'abonné au niveau de chaque ISD-R est avantageusement conforme au standard GSMA.

Dans un mode de réalisation de l'invention, les liaisons de communication sont établies pour transporter des messages APDU qui incluent au moins un champ permettant de définir une pluralité de sous-canaux logiques, par exemple jusqu'à vingt sous-canaux logiques. Ce champ peut être un sous-champ de l'octet CLA de classe présent, de façon obligatoire, dans l'entête des commandes APDU conformément à la norme ISO 7816. Par exemple, le champ est formé des bits notés b2b1 lorsque b8b7 valent '00' (offrant ainsi 4 numéros de canaux logiques, de 0 à 3) et des bits b4b3b2b1 lorsque b8b7 valent `01' (offrant ainsi 16 autres numéros de canaux logiques, de 4 à 19).

L'invention vise aussi un support d'informations lisible par un microprocesseur, comprenant des instructions d'un programme d'ordinateur pour mettre en oeuvre le procédé défini plus haut, lorsqu'elles sont chargées et exécutées par le microprocesseur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le support d'information peut être n'importe quelle entité ou dispositif capable de stocker le programme. Par exemple, le support peut comprendre un moyen de stockage, tel qu'une ROM, par exemple une ROM de microcircuit, ou encore un moyen d'enregistrement magnétique, par exemple un disque dur, ou encore une mémoire flash.

D'autre part, le support d'information peut être un support transmissible tel qu'un signal électrique ou optique, qui peut être acheminé via un câble électrique ou optique, par radio ou par d'autres moyens. Le programme peut en particulier être téléchargé sur une plateforme de stockage d'un réseau de type Internet, de type communication, ou bien de type télécommunication.

Alternativement, le support d'information peut être un circuit intégré dans lequel le programme est incorporé, le circuit étant adapté pour exécuter ou pour être utilisé dans l'exécution du ou des procédés en question.

### BREVE DESCRIPTION DES FIGURES

D'autres particularités et avantages de l'invention apparaîtront encore dans la description ci-après, illustrée par les figures ci-jointes qui en illustrent des exemples de réalisation dépourvus de tout caractère limitatif. Sur les figures :
- la **figure 1** illustre, de manière schématique, un exemple de système pour la gestion de profils dans une eUICC intégrée à un terminal hôte selon des techniques connues ;
- la **figure 2** représente schématiquement le cas d'un terminal DUAL SIM tel que connu ;
- la **figure 3** illustre, de façon schématique, un terminal hôte et une carte eUICC intégrée selon des modes de réalisation de l'invention ;
- la **figure 4** représente, sous forme de chronogramme, des étapes de gestion de liaisons logiques entre le terminal hôte et la carte eUICC de la **figure 3****,** selon des modes de réalisation de l'invention ;
- la **figure 5** représente, sous forme de chronogrammes, des étapes de routage de messages par profil actif, au niveau du terminal hôte selon des modes de réalisation de l'invention ;
- la **figure 6** représente, sous forme de chronogrammes, des étapes de routage de messages par profil actif, au niveau de la carte eUICC selon des modes de réalisation de l'invention ;
- la **figure 7** illustre des premiers modes de réalisation de l'invention conformes à la **figure 3** ;
- la **figure 8** illustre un tel premier mode de réalisation en version « full HCI/SWP » ;
- la **figure 9** illustre des deuxièmes modes de réalisation de l'invention ;
- la **figure 10** illustre un tel deuxième mode de réalisation en version « full HCI/SWP » ;
- la **figure 11** illustre des troisièmes modes de réalisation de l'invention ; et
- la **figure 12** illustre un tel troisième mode de réalisation en version « full HCI/SWP ».

### DESCRIPTION DETAILLEE DE L'INVENTION

La présente invention s'intéresse à la gestion d'éléments sécurisés tels que des eUICC, et notamment à la gestion de profils d'abonnés dans ces eUICC.

Un élément sécurisé, dénoté SE, est un composant ou plate-forme matérielle inviolable (typiquement une puce) utilisée dans un terminal hôte et capable d'héberger, de façon sûre, des applications et des données en conformité avec des règles et des exigences de sécurité fixées par des autorités de confiance.

Parmi les trois facteurs de forme d'un SE, l'UICC définit une puce physique qui contient l'application authentifiant un utilisateur dans un réseau de téléphonie mobile pour accéder à des services (voix, données, etc.). A cet effet, elle contient des applications telles que l'application SIM (Subscriber Identity Module - ou module d'identité d'abonné) détenant les informations d'identification de l'abonné dans le réseau mobile.

Une eUICC est une puce UICC qui est intégrée dans un terminal hôte, avec possibilité ou non de l'extraire suivant son facteur de forme. Il a été envisagé des mécanismes permettant de gérer, de façon sécurisée, différents abonnements au sein de la même carte eUICC. Les documents techniques « Remote Provisioning Architecture for Embedded UICC - Technical Spécification » (Version 3.2 du 27 Juin 2017) et « Remote SIM Provisioning (RSP) Architecture for consumer Devices » (Version 2.1 du 27 Février 2017), établis par la GSM Association (ou GSMA), décrivent certains mécanismes recommandés.

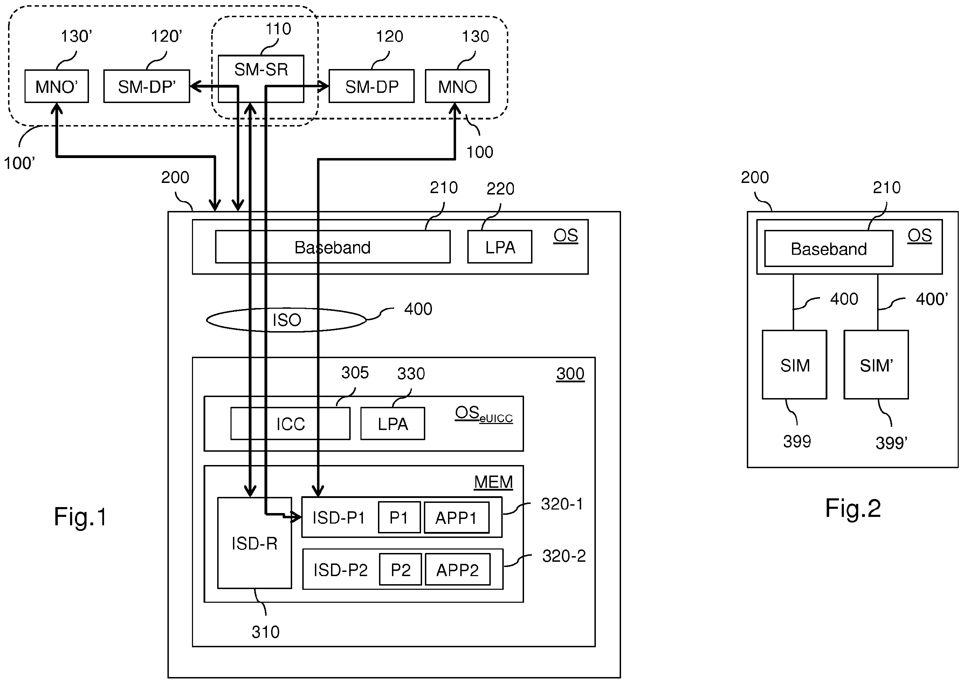

La **figure 1** illustre, de façon schématique, une structure d'un système pour la gestion de profils dans une eUICC intégrée à un terminal hôte, tel qu'il ressort des documents de la norme GSMA en mode « consumer » (consommateur). Le mode « M2M » (machine to machine » s'appuie sur une architecture assez similaire, mais où les modules LPA discutés ci-dessous ne sont pas mis en oeuvre.

Plusieurs réseaux de téléphonie mobile 100, 100' peuvent coexister, correspondant par exemple à plusieurs opérateurs de téléphonie mobile MNO, MNO' (pour « Mobile Network Operator »). De façon connue, ces réseaux peuvent partager certaines ressources.

Le réseau de téléphonie mobile 100 comporte une unité de routage sécurisé SM-SR 110 d'un serveur de gestion d'abonnement SM (non représenté pour une meilleure lisibilité), une unité de préparation de données SM-DP 120 d'un (même) serveur de gestion d'abonnement et des serveurs 130 propres à l'opérateur MNO gérant ce réseau de téléphonie mobile. Les fonctions principales, bien connues, de ces unités/serveurs sont décrites par la suite. Bien que les serveurs SM-SR et SM-DP soient représentés séparés, ils peuvent être mis en oeuvre au sein d'un même serveur (dénoté SM-DP+). La présente invention s'applique également à d'autres architectures de réseau de téléphonie mobile.

Les autres réseaux mobiles 100' présentent généralement une structure similaire ((notamment unité de préparation de données SM-DP' 120', serveurs 130' propres à l'opérateur MNO'), où l'unité SM-SR 110 peut être partagée entre réseaux mobiles.

Un terminal mobile 200, par exemple un téléphone portable, un smartphone, un ordinateur, une tablette, etc., comporte une carte eUICC 300 pour accéder de façon sécurisée aux services des réseaux mobiles 100, 100'.

Dans ce mode de réalisation particulier, le terminal mobile 200 comporte un système d'exploitation OS apte à contrôler une interface de communication (non représentée) avec le réseau mobile et à réaliser l'interfaçage entre cette interface de communication et la carte eUICC 300. La partie de l'OS réalisant ces opérations est connue sous l'appellation de processeur bande de base 210 ou « baseband processor » ou « baseband ». D'autres composants classiques du téléphone mobile 200 (tels qu'une batterie, une unité émettrice/réceptrice radio, une antenne, des interfaces utilisateurs - écran, clavier, etc.) ne sont pas illustrés sur la figure pour des raisons de clarté.

Sur la figure, seul un terminal mobile 200 embarquant une carte eUICC est représenté. Bien entendu, le réseau de téléphonie mobile inclut généralement une pluralité de tels terminaux mobiles équipés de cartes eUICC (ou SIM, USIM). La présente description s'intéresse aux cartes eUICC à titre d'exemple. D'une façon générale, la présente invention peut être mise en oeuvre dans tout type d'élément sécurisé SE contenant une pluralité de profils d'abonné, par exemple des éléments sécurisés embarqués, ou « eSE ».

La carte eUICC 300 comprend un système d'exploitation OS_{eUICC} (stocké en mémoire non-volatile type morte ou flash par exemple) couplé à une mémoire non volatile MEM. D'autres composants classiques présents dans la carte eUICC sont ici non représentés pour des raisons de clarté : interface (et contrôleur associé) de communication avec le terminal hôte, mémoire vive, bus de donnés, processeur, etc.

Conformément au standard GSMA, la carte eUICC 300 comprend, en mémoire non volatile MEM, un ou plusieurs domaines de sécurité pour la gestion de la carte et de profils d'abonné:
un domaine racine ou privilégié de sécurité d'émetteur 310 (ISD-R pour « Issuer Security Domain - Root ») défini, à la fabrication de l'eUICC, comme représentatif du propriétaire de la carte 300 et donc accessible (via un jeu de clés cryptographiques particulier) uniquement par lui. Ce domaine racine ISD-R comporte initialement un profil initial (dit « provisioning profile » selon le standard GSMA) permettant une connectivité réseau avec l'unité SM-SR 110 ;
un ou plusieurs domaines de sécurité de profil 320 (ISD-P pour « Issuer Security Domain - Profile ») généralement dédié chacun à un opérateur MNO. Chaque domaine ISD-P est un conteneur sécurisé (protégé par un jeu de clés cryptographiques notamment) prévu pour stocker, de façon sécurisée, un unique profil d'abonné P associé à une souscription de service auprès de l'opérateur MNO correspondant et pour permettre son accès.

De façon connue, un profil de communication P comporte des données de souscription (par exemple un identifiant IMSI, des clés cryptographiques, des algorithmes d'authentification et application NAA d'accès au réseau, etc.) et peut comporter en outre un système de fichiers, des applications APP, et/ou des règles d'exécution prédéterminées.

Dans l'exemple décrit ici, comme illustré en **figure 1****,** on suppose que la carte eUICC 300 comprend deux domaines de sécurité ISD-P1, ISD-P2 contenant respectivement un profil unique P1, P2 pouvant chacun être à l'état actif ou inactif. Du fait de cette unicité, on parle indifféremment de « profil actif » et d'« ISD-P actif ».

On comprend ici par profil « actif », ou profil à l'état « actif », le fait qu'un profil d'abonné est activé dans la carte eUICC 300 afin d'autoriser le terminal hôte 200 (avec lequel il coopère) à utiliser les données du profil pour s'authentifier à et communiquer avec le réseau de téléphonie mobile 100 associé au profil en question. Conformément au standard GSMA, un profil P (ou le domaine sécurisé ISD-P 320 dans lequel il est contenu) est dit « actif » (ENABLE) lorsque son paramètre d'état, dénommé « life cycle », est positionné à l'état '3F'. Selon le standard GSMA, un profil est au contraire dit « inactif » (DISABLE) lorsque son paramètre d'état « life cycle » est positionné à l'état '1F'.

Le profil P1 (respectivement P2) autorise, lorsqu'il est actif, le terminal hôte 200 à communiquer avec un réseau mobile 100 (respectivement 100') associé à l'opérateur de téléphonie MNO (respectivement MNO'). Le domaine de sécurité ISD-P1 (respectivement ISD-P2) peut en outre comprendre des applications APP1 (respectivement APP2) propres à l'opérateur MNO (respectivement MNO') auxquelles l'utilisateur a souscrit. Alternativement, ces applications APP peuvent être contenues directement dans le profil respectif.

Le domaine de sécurité racine ISD-R est privilégié en ce qu'il est notamment apte à créer ou supprimer des domaines de sécurité ISD-P 320 dans la mémoire non volatile MEM, et à activer ou désactiver des profils P chargés dans ces ISD-P 320 de l'eUICC.

De façon connue du standard GSMA, cette gestion est réalisée par l'échange de messages (commandes, réponses) entre l'unité SM-SR 110 et le domaine racine ISD-R 310. Les différentes fonctions et commandes de gestion de l'eUICC 300 sont définies dans le document GSMA « Remote Provisioning Architecture for Embedded UICC - Technical Spécification ».

Ces commandes et réponses sont notamment transmises sous forme de messages APDU au travers d'une liaison ISO 400 (conforme à ISO 7816-3 et 7816-4 par exemple) entre le processeur bande de base 210 et l'eUICC 300. Les messages APDU conformes à la norme ISO 7816 comportent un champ permettant de créer jusqu'à vingt sous-canaux logiques dans le canal ISO 400. Typiquement ce champ est constitué de bits formant l'octet CLA de classe présent, de façon obligatoire, dans l'entête des commandes APDU conformément à la norme ISO 7816. Par exemple, le champ est formé des bits notés b2b1 lorsque b8b7 valent '00' (offrant ainsi 4 numéros de canaux logiques, de 0 à 3) et des bits b4b3b2b1 lorsque b8b7 valent `01' (offrant ainsi 16 autres numéros de canaux logiques, de 4 à 19).

De tels sous-canaux logiques définis par les messages APDU sont généralement utilisés pour adresser plusieurs applications d'une même carte à puce, sur la seule liaison ISO 400 de communication.

Les commandes sont reçues par une partie de l'OS_{eUICC} dédiée au contrôle des communications avec le terminal hôte ; il s'agit d'une interface de contrôle de communication ICC 305.

La communication entre l'unité SM-SR 110 et l'ISD-R 310 peut être assurée et/ou protégée par le protocole SCP80, SCP81 ou CAT-TP.

Toujours de façon connue du standard GSMA, le chargement, la mise à jour ou la suppression de façon sécurisée des profils dans les domaines sécurisés ISD-P 320 est réalisée par l'échange de messages (commandes, réponses) entre l'unité SM-DP 120 et chaque domaine sécurisé ISD-P concerné de l'eUICC 300. L'unité SM-DP 120 prépare notamment les packages de profil à charger dans l'eUICC, puis les envoie au domaine ISD-P 320 concerné, via l'unité SM-SR 110 et l'ISD-R 310. A nouveau des messages APDU sont utilisés. La communication entre l'unité SM-DP 120 et l'ISD-P 320 (via le SM-SR 110) peut être protégée par le protocole SCP02 ou SCP03, encapsulé (sur l'interface SM-SR - ISD-R), dans le protocole SCP80, SCP81 ou CAT-TP.

En détail, le document GSMA « Remote SIM Provisioning (RSP) Architecture for consumer Devices » définit des services de gestion des profils, connus sous l'appellation d'« assistant de profil local » (LPA pour « Local Profile Assistant »), qui peuvent être mis en oeuvre dans le terminal hôte (LPA 220) et/ou dans l'eUICC (LPA 330 qui peut ou non faire partie de l'ISD-R 310). A titre d'exemple, ces services peuvent inclure un service de découverte locale de profil (LDS pour « Local Discovery Service ») pour connaître les profils P présents dans l'eUICC et leur état actif ou inactif, un service de chargement de profil local (LPD pour « Local Profile Download ») pour réaliser les opérations séquentielles de chargement ou mise à jour d'un profil P et un service d'interface utilisateur local (LUI pour « Local User interface ») pour récupérer/acquérir les actions de management de profils initiées localement par l'utilisateur (chargement, activation, désactivation, ...)..

Lorsqu'un profil d'abonné P ainsi chargé est activé par le SM-SR 110 (ou en variante par l'utilisateur via un menu sur le terminal hôte 200), il est équivalent à une UICC : il permet à l'utilisateur de s'identifier sur le réseau mobile 100 de l'opérateur MNO auquel il a souscrit l'abonnement correspondant au profil afin d'accéder à des services.

L'opérateur MNO 130 peut aussi accéder au profil P actif (et notamment à certaines actions prévues par l'opérateur dans ce profil) pour réaliser des actions de diverses natures (notamment la gestion à distance d'un composant du profil 320, par exemple une mise à jour de données ou d'offre ou de règles d'exécution, etc.). De façon réciproque, des applications dans le profil P actif peuvent être configurées pour transmettre des données au MNO 130. Ces échanges sont illustrés sur la **figure 1** par une flèche double sens entre le MNO 130 et le profil P1/application APP1. Ces échanges sont généralement réalisés à l'aide de messages APDU entre le MNO 130 et le profil P actif, possiblement protégés par le protocole SCP80, SCP81 ou CAT-TP.

La présence de plusieurs profils au sein de l'eUICC 300 facilite la gestion de plusieurs abonnements de téléphonie mobile d'un utilisateur, permettant par exemple de changer rapidement (sans substituer sa carte UICC) d'opérateur en passant la frontière ou selon la nature du service (voix, données, appel à l'étranger) souhaité ou l'heure d'accès au service (tarification différente selon les profils).

Toutefois, en l'état actuel de la norme GSMA, un seul profil 320 actif à la fois est autorisé au sein de l'eUICC 300, les autres profils (s'il y en a) étant alors inactifs jusqu'à une activation ultérieure qui rend, de façon automatique, inactif le profil actuellement actif. L'utilisateur du terminal 200 n'a donc accès qu'à un seul réseau mobile à la fois : celui de l'opérateur MNO correspondant au profil actif.

Pour activer simultanément plusieurs profils d'abonné, les solutions classiques s'appuient sur des terminaux multi-SIM, généralement dotés de deux cartes SIM (on parle alors de terminaux DUAL SIM) même si certains proposent trois voire quatre emplacements de cartes SIM.

Comme illustré schématiquement sur la **figure 2****,** chaque carte SIM 399, SIM' 399' est alors relié au processeur bande de base 210 au travers d'une liaison ISO 7816 spécifique 400, 400'. Ainsi, chaque carte SIM est utilisée de façon séparée.

Sauf indication contraire, les éléments communs ou analogues à plusieurs figures portent les mêmes signes de référence et présentent des caractéristiques identiques ou analogues.

Les terminaux dits DUAL ACTIVE permettent aux deux cartes SIM 399, SIM' 399' d'être actives et donc de fonctionner (pour recevoir/émettre un appel/des données) en même temps. Ces terminaux comprennent deux transmetteurs/émetteurs (e.g. antennes physiques), un dédié à chaque carte SIM.

Les terminaux dits DUAL STANDBY ne permettent pas cette activité simultanée. Les deux cartes SIM sont initialement actives jusqu'à ce que l'une 399 d'entre elles soit sollicitée pour émettre ou recevoir un appel/des données. En réponse à cette sollicitation, l'autre carte SIM' 399' devient inactive.

Dans ces terminaux DUAL SIM, le processeur bande de base 210 qui traite les signaux mobiles reçus est configuré pour associer, de façon statique, les deux liaisons ISO aux deux cartes SIM, et ainsi router les flux réseaux reçus du réseau mobile 100. Ces mécanismes de routage s'appuient directement sur les propriétés de protocole réseau 3GPP.

Pour utiliser simultanément plusieurs profils d'abonné, la solution consistant à intégrer deux cartes eUICC dans le terminal hôte n'apparaît pas satisfaisante car elle est onéreuse et ne tire pas profit de la possibilité déjà existante de disposer de plusieurs profils dans une seule carte eUICC.

La solution à cette problématique proposée dans le document FR 3 046 011 n'est pas entièrement satisfaisante. Elle requiert une gestion complexe des commandes APDU pour différencier les différents ISD-P ou profils actifs à cibler.

Il existe donc un besoin de solutions techniques pour permettre la gestion de, et donc l'accès à, plusieurs profils actifs au sein d'une même carte eUICC, aux fins de tirer bénéfice des multiples avantages des terminaux DUAL SIM (notamment de l'accessibilité simultanée à des services relevant de plusieurs profils).

Conformément à l'invention, le contrôleur d'interface de communication ICC 305 est configuré pour associer une pluralité de liaisons distinctes de communication avec le terminal hôte 200 à respectivement plusieurs profils d'abonné P simultanément actifs dans l'eUICC 300. Pour permettre une communication efficace avec le terminal hôte 200, le processeur bande de base 210 de ce dernier est aussi configuré pour associer une pluralité de liaisons distinctes de communication avec l'élément sécurisé à cette même pluralité de profils d'abonné P simultanément actifs dans l'élément sécurisé 300.

Ainsi il peut être prévu une ou plusieurs liaisons physiques autres que la seule liaison ISO classique d'une eUICC. L'invention peut ainsi tirer profit de la flexibilité des différentes interfaces physiques qu'un élément sécurisé peut utiliser dans un contexte autres que celui de la gestion de profils d'abonné (c'est-à-dire un contexte eUICC).

Une eUICC selon l'invention intégrée dans le terminal hôte supporte ainsi une connexion par des pattes de connexion autres que celles classiquement utilisées pour une carte eUICC.

L'établissement de différentes liaisons de communication distinctes (une pour chaque profil d'abonné actif d'une pluralité de profils d'abonné simultanément actifs dans l'eUICC) entre le terminal hôte et l'eUICC permet de router efficacement les flux de messages (commandes ou réponses) vers ou depuis chaque profil d'abonné actif correspondant, en utilisant la liaison de communication établie pour ce profil actif.

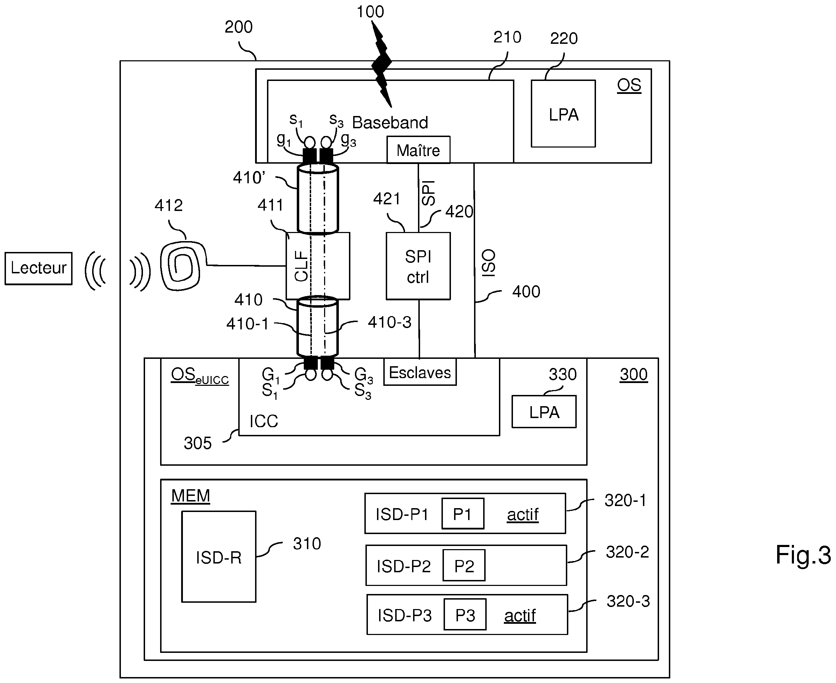

La **figure 3** illustre, de façon schématique, un terminal hôte 200 intégrant une carte eUICC 300, selon des modes de réalisation de l'invention.

Le terminal hôte comporte toujours une interface de communication (non représentée) laquelle offre une pluralité de ressources de communication permettant la connexion du terminal à plusieurs opérateurs à l'aide de plusieurs profils. L'interface de communication peut comprendre une seule antenne physique ou plusieurs antennes physiques, et celles-ci peuvent éventuellement mettre en oeuvre un multiplexage (temporel, fréquentiel, ou autre) offrant ainsi une pluralité de ressources de communication (slot temporel, porteuse fréquentielle, etc.) pour l'accès aux réseaux mobiles à l'aide de plusieurs profils.

Dans l'exemple de la figure, la terminal hôte 200 possède, outre un lien ISO 400 classique, un module de gestion de communication sans contact, dénoté CLF 411, et un bus SPI 420 géré par un contrôleur SPI (SPI ctrl) 421.

De façon connue le module CLF 411 est utilisé par l'OS pour communiquer sans contact avec un lecteur externe via une antenne 412 du terminal 200. Le module CLF 411 est connecté à une ou plusieurs pattes de l'eUICC 300, typiquement une unique patte permettant la mise en oeuvre du protocole SWP. La connexion du module CLF à l'OS du terminal et à l'eUICC 300 est connue de l'homme du métier, puisqu'elle est déjà mise en oeuvre pour des éléments sécurisés suivant le facteur de forme « eSE » défini par le standard Global Platform (pour « embedded Secure Element »). Ainsi, un nouveau lien physique 410 (ici basé sur le protocole SWP) est mis en place entre le CLF 411 et l'eUICC 300. Le CLF 411 et l'OS étant par ailleurs raccordé via un lien physique 410' (par exemple de type I²C, SPI, ...). Le CLF 411 permet donc la mise en place d'un lien physique entre l'eUICC et l'OS.

De façon similaire, le contrôleur SPI 421 permet de mettre en place un bus physique 420 de communication entre l'OS et l'eUICC 300.

Ces trois liens physiques tels qu'illustrés sur le **figure 3** ne sont que des exemples. D'autres natures de liens physiques (par exemple I2C) peuvent être utilisées en combinaison ou en remplacement. Plusieurs liens physiques de même nature peuvent également être utilisés, par exemple plusieurs liaisons ISO.

Comme il sera décrit par la suite, les liens SWP et SPI supportent des mécanismes, tels que l'interface HCI pour le protocole SWP (ou HCI/SWP), permettant la mise en place aisée de plusieurs liaisons logiques de communication simultanées. Ainsi, des modes de réalisation de l'invention peuvent mettre en oeuvre un unique lien physique permettant d'instancier plusieurs liaisons logiques simultanées. Par exemple, certains modes de réalisation, dits « full HCI/SWP », peuvent être uniquement basés sur l'interface HCI/SWP.

L'interface HCI est une interface logique qui met en oeuvre un ensemble de processus hôtes connectés à un contrôleur HCl, formant ainsi une topologie de liaisons physiques en étoile où les échanges de messages entre différents hôtes sont réalisés via le contrôleur HCl. Ce contrôleur HCl est notamment mis en oeuvre dans le module CLF 411. L'interface HCI est plus amplement décrite dans le document technique ETSI TS 102 622 V12.0.0, intitulé « Smart Cards; UICC - Contactless Front-end (CLF) Interface; Host Controller Interface (HCl) ».

De façon connue, deux entités peuvent échanger selon un protocole d'établissement de communication HCl pour établir une liaison logique de communication entre elles. Dans la présente invention, ainsi le processeur bande de base 210 et le contrôleur ICC 305 de l'eUICC 300 peuvent établir des liaisons logiques de communication, sous HCI, pour chaque profil actif de l'eUICC. Cela sera décrit plus en détails par la suite.

Le processeur bande de base 210 va ainsi instancier un hôte ou service dédié par exemple à l'eUICC 300 ou à un ISD-R 310 particulier ou au profil actif P ciblé. Le processeur bande de base 210 va par exemple associer l'hôte ou service instancié à une ressource de communication (antenne ou slot temporel ou fréquentiel, etc.), définissant de la sorte un lien unique entre un profil actif et la ressource de communication (via l'hôte ou service). Les opérations ultérieures du processeur 210 consisteront principalement à router les flux réseaux reçus sur l'hôte ou service ad hoc (selon bien entendu le profil actif P ciblé par ces flux, notamment selon la ressource de communication sur laquelle ils sont reçus).

De son côté, le contrôleur ICC 305 va instancier un hôte ou service pour chaque profil actif souhaité. Les opérations ultérieures du contrôleur ICC 305 consisteront principalement à router les messages reçus via un hôte/service vers le profil actif correspondant (et réciproquement pour transmettre les réponses de ce profil actif sur l'hôte/service ad hoc).

L'établissement d'une liaison logique entre ces hôtes comprend alors, de façon connue, l'instanciation de portes (« HCI gates ») et l'établissement d'un tunnel (ou « HCl pipe ») entre ces HCl gates. Le processeur bande de base 210 peut donc comprendre une table de correspondance (ou équivalent) mémorisant les associations {profil P actif - HCl gate ou pipe du côté terminal}, alors que le contrôleur ICC 305 peut comprendre une table de correspondance mémorisant les associations {profil P actif - HCl gate ou pipe du côté eUICC}. Notamment, la table du côté processeur bande de base 210 peut associer un HCI gate ou pipe (côté terminal) avec une ressource de communication affectée (antenne ou slot temporel ou fréquentiel, etc.), Le lien effectif avec un profil P actif est effectué par la table côté contrôleur ICC 305.

Dans l'exemple de la figure, la carte eUICC 300 présente deux profils d'abonné actifs, P1 et P3, gérés sous un même domaine de sécurité racine ISD-R 310. Des services S1 et S3 sont mis en oeuvre par le contrôleur ICC 305 dédiés respectivement aux profils actifs P1 et P3. De même, le processeur bande de base 210 instancie deux services s1 et s3 utilisés pour le routage des messages relatifs aux deux profils P1 et P3, par exemple des messages reçus sur deux antennes distinctes ou sur deux ressources de communication distinctes. La mise en oeuvre de l'interface HCI/SWP permet d'instancier deux portes G1 et G3 au niveau du contrôleur ICC 305 associées respectivement aux services S1 et S3 et deux portes g1 et g3 au niveau du processeur bande de base 210 associées respectivement aux services s1 et s3 des profils actifs P1 et P3. Deux tunnels ou pipes HCl sont ainsi établis : le tunnel 410-1 entre g1 et G1 dédié au transport des messages concernant le seul profil actif P1 et le tunnel 410-3 entre g3 et G3 dédié au transport des messages concernant le seul profil actif P3.

Dans cet exemple, les liens physiques SPI 420 et ISO 400 ne sont pas utilisés. Il pourrait être omis de telle sorte que ce mode de réalisation est « full HCI/SWP ».

De façon similaire, le contrôleur SPI 421 permet d'établir des liaisons logiques entre un unique maître SPI prévu au niveau du processeur bande de base 210 et une pluralité de processus esclaves SPI prévus au niveau du contrôleur ICC 305, chacun étant associé, statiquement ou dynamiquement, aux différents profils P de l'eUICC.

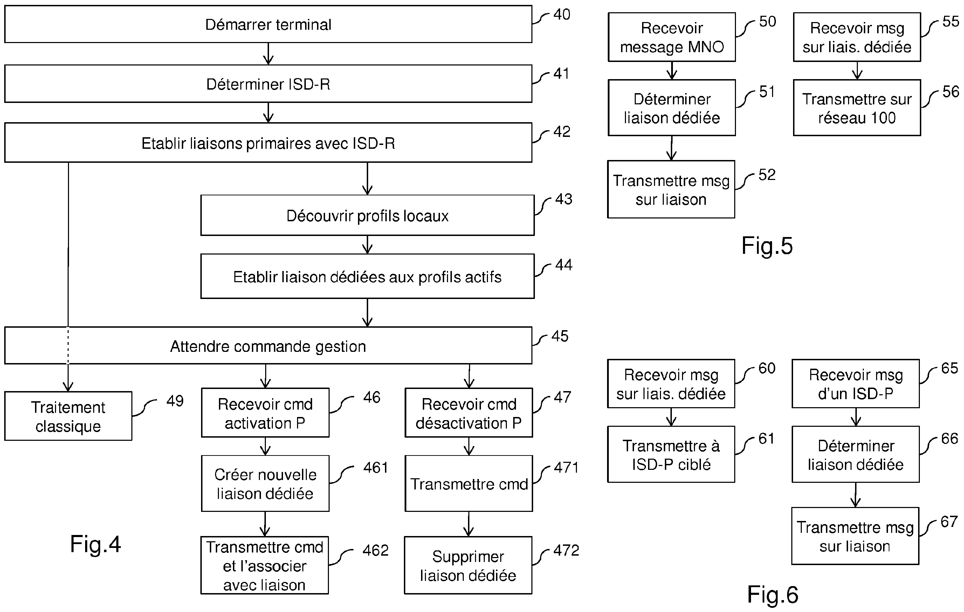

La **figure 4** illustre, à l'aide d'un ordinogramme, des étapes de gestion des liaisons logiques.

A l'étape 40, le terminal hôte 200 contenant la carte eUICC 300 est démarré, par exemple par l'utilisateur. De façon classique, cette opération lance l'exécution du système d'exploitation OS, et donc du processeur bande de base 210, et alimente l'eUICC 300.

Dans une étape 41, le terminal 200 détermine le ou les domaines de sécurité racines ISD-R 310 de la carte eUICC 300. Il en détermine le nombre, détermine l'identifiant (AID) de chaque ISD-R ainsi que l'entité logique correspondante dans l'eUICC avec laquelle il convient d'établir une liaison de communication. Il peut s'agir d'un service associé de façon générique à l'eUICC ou à chaque ISD-R pour le cas de l'interface HCI/SWP, ou d'un esclave associé à chaque ISD-R pour le cas de l'interface SPI.

Cette information peut être statique, c'est-à-dire définie en mémoire du terminal 200 lorsque la carte eUICC 300 est intégrée au terminal ou avoir été récupérée lors d'une procédure (voir les étapes suivantes) précédente de découverte des ISD-R dans la carte eUICC 300. L'étape 41 consiste alors à lire cette information en mémoire.

L'information peut également être dynamique ou ne pas avoir encore été obtenue par le terminal 200. Dans ce cas, le terminal 200 peut réaliser une procédure de découverte des ISD-R 310 dans la carte eUICC 300 en échangeant avec cette dernière sur une liaison primitive.

Cette liaison primitive peut par exemple être la liaison ISO 400 classique accessible par le processeur bande de base 210. En variante, ce dernier peut utiliser une liaison logique primitive, de type tunnel HCl statique, dédiée à l'eUICC 300. Un tunnel HCl est dit statique s'il est toujours disponible, ce qui peut être le cas si une porte (gate) primitive ou générique gₚ est toujours disponible sur le terminal et une porte primitive ou générique correspondante Gₚ est toujours disponible sur l'eUICC (et connue du processeur bande de base). Ainsi, le tunnel primitif statique entre gₚ et Gₚ peut être utilisé. Une même approche peut être mise en oeuvre sur la base de l'interface SPI.

La procédure de découverte des ISD-R peut reposer sur un jeu de commandes/réponses échangées par le processeur bande de base et l'OS_{eUICC} de la carte eUICC 300, via le tunnel primitif établi.

A titre illustratif, une commande étendue de GlobalPlatform de type GET DATA peut être utilisée. Les octets P1P2 de l'entête de commande APDU sont en particulier mis à une valeur spécifique identifiant la commande GET DATA comme faisant part de la procédure de découverte.

La commande étendue comprend, dans sa partie de données utiles, la portion d'AID commune aux ISD-R, notamment les chiffres hexadécimaux 15 à 20 sont mis à '00 00 01' comme défini en Annex H de la documentation technique « SGP.02 - Remote Provisioning Architecture for Embedded UICC Technical Spécification v3.2». Cette portion commune indiquée dans la commande peut être utilisée comme masque par l'eUICC 300 pour retourner tous les AIDs qu'elle contient qui correspondent au masque (donc tous les AlDs d'ISD-R).

Ainsi, en réponse à la commande, l'eUICC 300 retourne les AIDs de tous les ISD-R qu'elle héberge, ces AIDs retournés comportant la portion d'AID commune ('00 00 01') suivie d'une portion différenciante, par exemple les chiffres hexadécimaux 21 et 22 de l'AID (permettant de différencier jusqu'à 256 ISD-R).

Une fois les ISD-R connus du processeur bande de base 210, ce dernier établit une liaison primaire pour chaque ISD-R identifié. C'est l'étape 42.

Un ISD-R (éventuellement le seul) peut être affecté à la liaison ISO 400 classique, s'il y en a une. Une liaison logique primaire (un tunnel dynamique HCl ou une liaison maître-esclave SPI) peut être établie pour chacun des autres ISD-R identifiés, entre une porte HCI instanciée par le processeur 210 pour cet ISD-R ou le maître SPI du processeur 210 et la porte HCl ou l'esclave SPI de l'eUICC 300 obtenu à l'étape 41 pour l'ISD-R considéré.

Dans le cas d'un terminal « full HCI/SWP » avec une carte eUICC 300 présentant trois ISD-R 310, le processeur bande de passe 210 établit trois tunnels dynamiques primaires 410-x HCI/SWP entre trois portes instanciées par le processeur 210 pour chacun des trois ISD-R et une ou plusieurs portes prévues par le contrôleur ICC 305 de l'eUICC 300. Les trois tunnels peuvent par exemple relier la même porte HCI générique à l'eUICC dans le contrôleur ICC 305. En variante, ils peuvent relier chacun une porte HCI dédiée à leur ISD-R spécifique.

En variante, des tunnels HCI statiques sont établis si les portes mises en jeu sont définies de façon statique et toujours présentes.

Le processeur bande de base 210 garde trace de ces liaisons créées aux fins d'effectuer des routages de messages appropriés. Il peut par exemple créer et maintenir à jour une table des ISD-R associant les liaisons primaires créées aux différents ISD-R.

Dans un mode de réalisation de l'invention où les profils P de l'eUICC 300 sont répartis sous la gestion de plusieurs ISD-R 310 et seulement un unique profil d'abonné est actif à la fois par ISD-R, la liaison primaire ainsi établie pour chaque ISD-R est alors dédiée au profil actif P (ou ISD-P) de ce domaine racine. On a ainsi une liaison dédiée à chaque profil P actif.

On se retrouve en quelque sorte dans une gestion classique 49 de chaque ISD-R pris isolément où l'ensemble des commandes/réponses APDU (de création/suppression d'ISD-P, de chargement/mise à jour/suppression de profils dans les ISD-P de l'ISD-R concerné, d'activation/désactivation de profil, de sollicitation par le MNO) passent par la même liaison primaire associée à l'ISD-R (comme les solutions classiques le font au travers de la seule liaison ISO 400 de la **figure 1****).**

Dans un mode de réalisation où l'on active simultanément (c'est-à-dire maintient simultanément dans un état actif) plusieurs profils P gérés sous un même domaine de sécurité racine (comme par exemple dans le cas de la **figure 3****),** le processeur bande de base 210 détermine à l'étape 43 les profils locaux de chaque ISD-R.

Pour ce faire, le processeur bande de base 210 peut utiliser les services de découverte (LPD) sur la liaison primaire de chaque ISD-R, pour récupérer la liste des profils locaux (et donc ISD-P 320) ainsi que leurs états (actif ou non).

Sur la base des informations obtenues, le processeur bande de base 210 sollicite, à l'étape 44, l'établissement d'une liaison dédiée à chaque profil P actif. Il peut par exemple s'agir d'utiliser une ou plusieurs liaisons ISO additionnelles et/ou des tunnels HCl à créer et/ou des canaux SPI.

La liaison primaire établie pour chaque ISD-R peut être affectée et donc être dédiée à un premier profil P actif. Avantageusement cette liaison primaire n'est utilisée que pour les commandes/réponses de gestion de profil comme décrit par la suite.

Dans le cas d'un terminal « full HCI/SWP » avec une carte eUICC 300 selon la **figure 3** (deux profils actifs), le processeur bande de passe 210 établit deux tunnels HCl dédiés 410-1 et 410-3 entre deux portes g₁ et g₃ instanciées par le processeur 210 pour chacun des deux profils P1 et P3 actifs et une ou plusieurs portes prévues par le contrôleur ICC 305 de l'eUICC 300. Les deux tunnels peuvent par exemple relier la même porte HCI générique à l'eUICC ou à l'ISD-R instanciée par le contrôleur ICC 305. En variante, ils peuvent relier chacun une porte HCI dédiée à leur profil actif, c'est-à-dire G₁ pour le profil P1 et G₃ pour le profil P3.

Le processeur bande de base 210 garde trace de ces liaisons créées aux fins d'effectuer des routages de messages appropriés. Il peut par exemple créer et maintenir à jour une table des profils actifs associant les liaisons dédiées créées aux différents profils actifs. De la sorte, il associe une pluralité de liaisons distinctes de communication avec l'eUICC à une pluralité respective de profils d'abonné actifs de l'eUICC.

A ce stade, le processeur bande de base 210 route les flux GSM reçus des MNO sur les réseaux mobiles vers les profils actifs correspondants. Ce routage est expliqué ci-après en lien avec la **figure 5****.**

De préférence, le processeur bande de base 210 peut définir, de façon statique, un certain nombre de portes ou services (HCl, SPI) associés à un nombre de ressources de communication (antennes, slot temporel ou fréquentiel, etc.) disponibles. Ce sont ces portes ou services qui sont utilisées pour établir les liaisons primaires avec des portes ou esclaves instanciés par l'eUICC 300 (étape 42) et/ou les liaisons dédiées aux profils actifs (étape 44).

Aussi, il ne peut y avoir plus de liaisons (primaires et dédiées) que le nombre maximal de ressources de communication (nombre qui dépend du nombre d'antennes et des mécanismes de multiplexage qui peuvent être mis en oeuvre).

Dans cette approche, il résulte qu'une ressource de communication disponible n'est associée *in fine* (et donc utilisée par) qu'à un seul profil actif à la fois.

Le processeur bande de base 210 se met en attente de commandes de gestion administrative des domaines racines ISD-R à l'étape 45.

Cette gestion est réalisée par échanges de commandes/réponses classiques sur la liaison primaire associée à chaque ISD-R. Il s'agit notamment des opérations de création/suppression d'ISD-P, de chargement/mise à jour/suppression de profils P dans les ISD-P de l'ISD-R concerné et/ou d'activation/désactivation de profils. En variante, d'autres mécanismes déclenchant des opérations administratives peuvent être envisagés dans le cadre de la présente invention, comme recevoir des commandes via des canaux différents (par exemple NFC [communication à champs proche] ou Wifi [nom commercial]) ou utiliser des composants internes (type LPA sur le terminal hôte 200) qui génèrent par eux-mêmes de telles demandes administratives (par exemple l'activation d'un profil).

Dans un mode de réalisation où chaque profil actif P dispose seulement d'une liaison dédiée avec le processeur bande de base 210, les actions d'activation/désactivation de profils peuvent conduire à une modification des liaisons dédiées.

Aussi, à l'étape 46, une commande d'activation d'un profil P d'un ISD-R cible, par exemple le profil P2 de la **figure 3****,** est reçue soit par le processeur bande de base 210 soit par l'ISD-R ciblé.

En réponse, une nouvelle liaison avec l'eUICC 300 est créée à l'étape 461, par exemple un nouveau tunnel HCl 410-2 entre une portes g₂ instanciée par le processeur 210 pour le profil P2 à activer et une porte prévue par le contrôleur ICC 305 (une porte HCI générique à l'eUICC ou à l'ISD-R ou une porte HCl G₂ dédiée à ce profil P2).

Par exemple, diverses portes peuvent être pré-assignées à différentes ressources de communication du terminal hôte 200 et la porte g₂ peut être choisie comme la première des portes pré-assignées non encore utilisée. Cette information peut être connue de l'ISD-R ciblé ou récupérée par ce dernier, auprès du processeur bande de base 210, via par exemple la liaison primaire.

Connaissant cette information, l'ISD-R ciblé peut demander l'instanciation de la porte G₂ auprès du contrôleur ICC 305 et l'établissement de la liaison dédiée 410-2 entre les portes g₂ et G2.

Puis à l'étape 462, la commande d'activation du profil P (P2 dans l'exemple) est liée à la nouvelle liaison créée (410-2 dans l'exemple). Par exemple, le processeur bande de base 210 peut envoyer cette commande sur la liaison 410-2 nouvellement créée, de sorte que l'eUICC sache directement que cette nouvelle liaison est à associer avec le profil P2 à activer. En variante, le processeur bande de base 210 peut envoyer la commande d'activation sur la liaison primaire associée à l'ISD-R concerné, en renseignant un identifiant de la liaison nouvellement créer de sorte à indiquer que cette nouvelle liaison est dédiée à ce profil à activer.

Enfin, si l'ISD-R a récupéré l'information de porte pré-assignée g₂ et créé la liaison 410-2 par lui-même, il connaît l'association entre 410-2 (ou la porte G₂) et le profil P2.

Le contrôleur ICC 305 garde trace de cette nouvelle liaison en mettant à jour par exemple une table des profils actifs associant les liaisons dédiées créées (ou les portes Gᵢ) aux différents profils actifs.

De son côté, le processeur bande de base 210 peut disposer d'une table assez similaire, associant les liaisons dédiées créées (ou les portes gᵢ) aux différents profils actifs. En variante, l'association peut être indirecte : le processeur bande de base 210 a seulement trace des portes pré-assignées gᵢ et des ressources de communication associées. C'est indirectement la table au niveau du contrôleur ICC 305 qui permet de faire le lien avec les profils.

On voit ainsi que, dans cet exemple, le terminal 200 peut se connecter à un réseau de téléphonie mobile à l'aide du profil P2, via la ressource de communication correspondant à la porte pré-assignée g₂.

Une modification des liaisons dédiées a également lieu en cas de désactivation d'un profil.

A l'étape 47, une commande de désactivation d'un profil P d'un ISD-R cible, par exemple le profil P1 de la **figure 3****,** est reçue. La commande est transmise, à l'étape 471, soit sur la liaison dédiée à ce profil, soit sur la liaison primaire de l'ISD-R concerné.

Puis la liaison dédiée est supprimée (notamment par la terminaison du tunnel HCl ou de la liaison maître-esclave SPI correspondante) à l'étape 472, s'il ne s'agit pas en même temps de la liaison primaire associée à l'ISD-R.

Le contrôleur ICC 305 et éventuellement le processeur bande de base 210 gardent trace de cette liaison supprimée en mettant à jour par exemple la table des profils actifs associant les liaisons dédiées aux différents profils encore actifs.

Notamment, dans le cas des portes (ou services) pré-assignées, aucune action n'est effectuée par le processeur bande de base 210. Seul le contrôleur ICC 305 peut supprimer la porte gᵢ concernée et mettre à jour sa table des profils actifs.

L'exemple de la **figure 4** s'appuie sur des procédures dynamiques de découverte des ISD-R et des profils actifs. Dans une variante, l'ensemble des profils existants sur l'eUICC 300 peut être défini dans le terminal 300 (ou avoir été récupéré au préalable une bonne fois pour toute), et le processeur bande de base 210 peut créer de façon statique une liaison dédiée pour chaque profil, qu'il soit actif ou non. Cette approche statique évite une gestion administrative des liaisons dédiées au cours de l'utilisation de l'eUICC 300.

Le process de la **figure 4** s'applique au démarrage du terminal 300. Des opérations similaires peuvent être mises en oeuvre en cas de rafraichissement (ou « refresh ») du terminal : par exemple les tunnels HCI statiques existent en permanence alors que les tunnels HCl dynamiques doivent être réétablis.

La **figure 5** illustre, à l'aide d'un ordinogramme, des étapes de routage, par le processeur bande de base 210, de messages entre un profil P actif et un MNO 130 correspondant.

En mode réception, le processeur 210 reçoit, à l'étape 50, un message du MNO 130 pour le profil P actif. Il s'agit généralement d'une commande. A l'étape 51, il détermine le profil P concerné par ce message (par exemple via une information dans le flux radio reçu) et la liaison dédiée à ce profil P actif. Par exemple, le processeur 210 consulte la table des profils actifs pour déterminer la liaison dédiée associé au profil déterminé. Une fois la liaison dédiée identifiée, le processeur 210 transmet, à l'étape 52, le message reçu sur cette liaison dédiée, notamment sous forme de commande APDU.

Dans le cas des portes (ou services) pré-assignées aux ressources de communication disponibles, le processeur 210 n'a, avantageusement, qu'à router les messages reçus via une ressource de communication sur la porte pré-assignée correspondante.

En mode transmission, le processeur 210 reçoit, à l'étape 55, un message de l'eUICC 300 sur une liaison dédiée à un profil P actif. Il s'agit généralement d'une réponse APDU à une commande APDU transmise à l'étape 52. A l'étape 56, le processeur 210 transmet la réponse au MNO 130 via le réseau de téléphonie mobile 100 de cet opérateur.

Encore une fois, dans le cas des portes (ou services) pré-assignées aux ressources de communication disponibles, le processeur 210 n'a, avantageusement, qu'à router les messages reçus via une porte pré-assignée sur le ressource de communication correspondante.

De son côté, lorsque l'eUICC 300 est mise en route (via son alimentation électrique par le terminal 200), elle réagit aux commandes reçues sur ses interfaces de communication avec le terminal 200 en les exécutant puis en transmettant des réponses sur ces mêmes interfaces.

Ces commandes peuvent relever de la gestion administrative des domaines sécurisés ISD-R et ISD-P : procédures de découverte, commandes de création/suppression d'ISD-P, de chargement/mise à jour/suppression de profils dans les ISD-P, d'activation/désactivation de profil. Elles sont traitées de façon classique par l'eUICC 300.

Toutefois, lorsqu'une nouvelle liaison de communication est créée entre elle et le processeur bande de base 210, le contrôleur ICC 305 peut également mettre à jour une table des ISD-R et une table des profils actifs dans lesquelles il tient à jour d'une part les associations entre les liaisons primaires créées et les ISD-R, et d'autre part les associations entre les liaisons dédiées et les profils actifs. Ces tables permettent au contrôleur ICC 305 de réaliser les routages idoines comme décrit ci-après en référence à la **figure 6****.**

En mode réception, le contrôleur ICC 305 reçoit, à l'étape 60, un message du terminal sur une liaison dédiée à un profil P actif. Il s'agit généralement d'une commande APDU transmise à l'étape 52. A l'étape 61, le contrôleur ICC 305 transmet ce message à l'ISD-P correspondant au profil P actif, en s'appuyant sur la table des profils actifs.

En mode transmission, le contrôleur ICC 305 reçoit, à l'étape 65, un message d'un profil P actif (ou d'un ISD-P). Il s'agit généralement d'une réponse à une commande transmise à l'étape 61. A l'étape 66, le contrôleur ICC 305 détermine la liaison dédiée à ce profil P actif. Par exemple, le contrôleur ICC 305 consulte la table locale des profils actifs pour déterminer la liaison dédiée associé au profil P. Une fois la liaison dédiée identifiée, le contrôleur ICC 305 transmet, à l'étape 67, le message reçu sur cette liaison dédiée (qui sera reçue par le processeur bande de base 210 à l'étape 55).

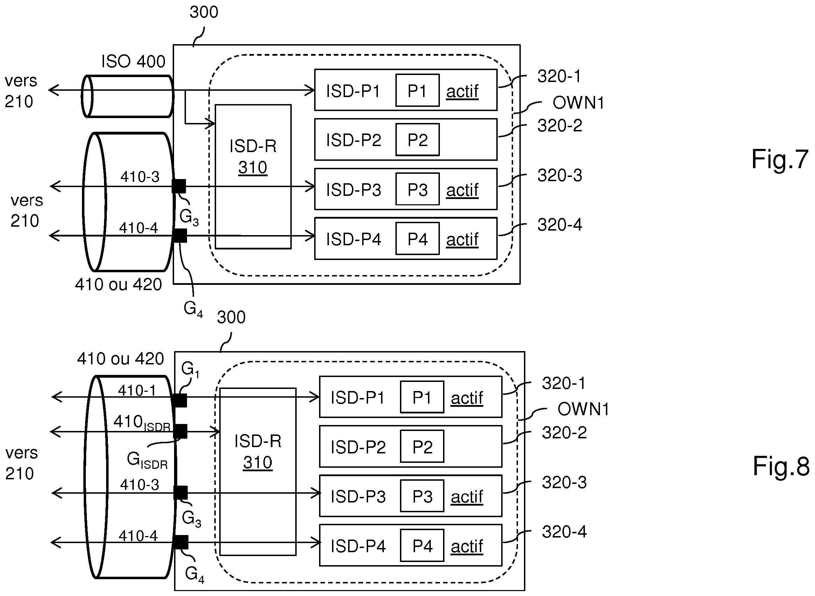

La **figure 7** illustre un mode de réalisation de l'invention, similaire à celui de la **figure 3****,** dans lequel l'élément sécurisé 300 contient un seul domaine ISD-R 310 (correspondant à une simple propriété OWN1), lequel comporte une pluralité de profils P1 à P4 (et ISD-P1 à ISD-P4 correspondants). Dans ce mode, plusieurs profils d'abonné gérés sous le même domaine de sécurité racine ISD-R 310 sont actifs simultanément, ici P1, P3 et P4.

Parmi les liaisons dédiées aux profils et mises en oeuvre, celle dédiée à P1 est une liaison ISO classique conforme à la norme ISO 7816. Cette liaison ISO peut également être la liaison primaire associée au domaine racine ISD-R 310 pour la gestion administrative des profils. Dans l'exemple de la figure, les liaisons dédiées aux profils actifs P3 et P4 sont par exemple des liaisons logiques (ou *pipes*) 410-3 et 410-4 établies au travers d'une interface de contrôleur d'hôte, HCl, sur une liaison physique 410 entre l'élément sécurisé et le terminal hôte. A cette fin, les portes G3 et G4 sont instanciées par le contrôleur ICC 305. En variante, une même porte dédiée à l'ISD-R, voire à toute l'eUICC peut être utilisée par ces tunnels HCl, les tunnels se différenciant par les portes instanciées du côté du processeur bande de base 210.

Dans une variante à l'interface HCI/SWP, des liaisons maître-esclave SPI peuvent être utilisées. Bien entendu, l'utilisation de un ou plusieurs tunnels HCl peut être combinée avec l'utilisation d'une ou plusieurs liaisons SPI. Dans une autre variante, tout ou partie de ces autres liaisons dédiées aux profils P3 et P4 peut être mis en oeuvre au travers d'un lien ISO additionnel.

Le mode de réalisation de la **figure 7** utilise la liaison ISO classique comme liaison primaire pour l'ISD-R 310. En variante, un tunnel HCI primaire (non représenté) peut être établi pour l'ISD-R 310 (gestion administrative des ISD-P et profils) via une porte dédiée.

La **figure 8** illustre la même configuration que la **figure 7** dans un mode « fulll HCI/SWP » : un tunnel HCl primaire 410_{ISDR} est établi pour l'ISD-R (gestion administrative des ISD-P et profils) via une porte G_{ISDR} dédiée, un tunnel dédié 410-1 est établi pour le profil actif P1 via la porte G₁, un tunnel dédié 410-3 est établi pour le profil actif P3 via la porte G₃, et un tunnel dédié 410-4 est établi pour le profil actif P4 via la porte G₄. En variante, une même porte dédiée à l'ISD-R, voire à toute l'eUICC peut être utilisée par ces tunnels HCl, les tunnels se différenciant par les portes instanciées du côté du processeur bande de base 210.

Une variante de la **figure 8** peut consister en un mode « full SPI » où toutes les liaisons sont SPI.

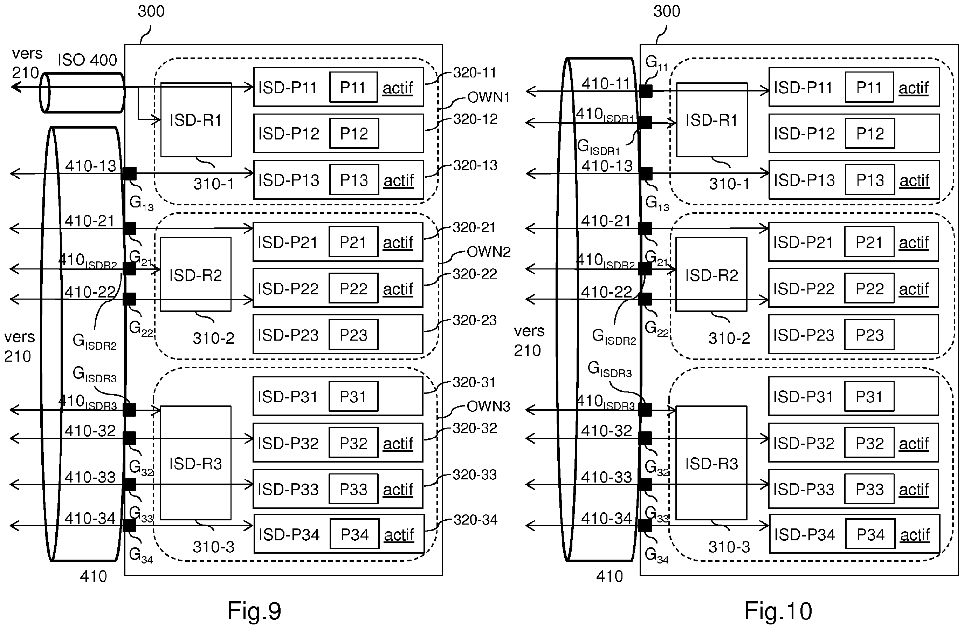

La **figure 9** illustre un autre mode de réalisation dans lequel les profils d'abonné présents dans l'élément sécurisé sont répartis sous la gestion de plusieurs domaines de sécurité racines, ici trois domaines ISD-R1 à ISD-R3 (correspondant à trois propriétés OWN1 à OWN3). Les domaines racines peuvent contenir des nombres variables de profils P et des nombres variables de profils actifs parmi ceux-ci.

Dans cet exemple, plusieurs profils d'abonné gérés sous le même domaine de sécurité racine ISD-R 310 sont actifs simultanément, ici P11 et P13 pour l'ISD-R1, P21 et P22 pour l'ISD-R2 et P32, P33 et P34 pour l'ISD-R4.

La liaison ISO 400 est dédiée au premier profil actif P11, et partagée avec l'ISD-R1 pour la gestion administrative des profils dans ce domaine racine.

Pour l'ensemble des autres profils actifs, le processeur bande de base 210 et le contrôleur ICC 305 établissent des tunnels HCl dédiés : 410-13 via la porte G13 pour le profil P13, 410-21 via la porte G21 pour le profil P21, etc. En variante, une même porte dédiée à chaque ISD-R ou une porte générale dédiée à toute l'eUICC peut être utilisée par ces tunnels HCl, les tunnels se différenciant alors par les portes instanciées du côté du processeur bande de base 210.

Dans une variante ou en combinaison, un ou plusieurs liaisons maître-esclave peuvent être utilisées et/ou un ou plusieurs liens ISO additionnels.

La **figure 10** illustre la même configuration que la **figure 9** dans un mode « fulll HCI/SWP » : un tunnel 410_{ISDR} est établi pour chaque domaine racine via une porte G_{ISDR} correspondante (pour la gestion administrative) et un tunnel 410-x est établi pour chaque profil Px actif via une porte G_{X}. En variante, une même porte dédiée à chaque ISD-R ou une porte générale dédiée à toute l'eUICC peut être utilisée par ces tunnels HCl, les tunnels se différenciant alors par les portes instanciées du côté du processeur bande de base 210.

Une variante de la **figure 10** peut consister en un mode « full SPI » où toutes les liaisons sont SPI.

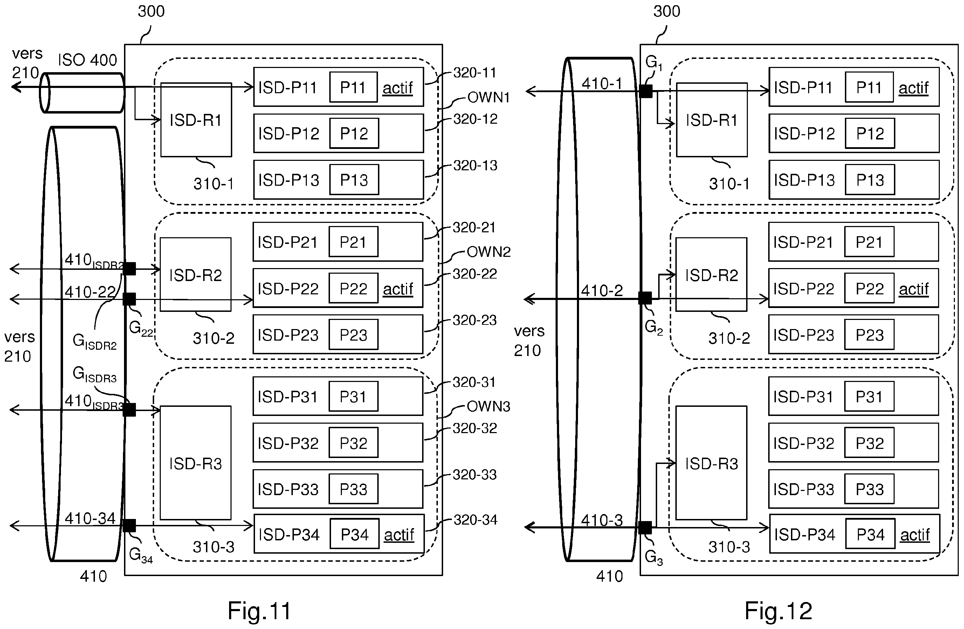

La **figure 11** illustre un autre mode de réalisation dans lequel les profils d'abonné présents dans l'élément sécurisé sont répartis sous la gestion de plusieurs domaines de sécurité racines, et un seul profil d'abonné P est activé à la fois par domaine de sécurité racine ISD-R.

Dans ce cas, la liaison classique ISO 400 peut être dédiée au premier domaine racine ISD-R1 et être utilisée de façon classique pour gérer les profils dans ce domaine et pour transporter les échanges entre un profil actif P et son MNO 130.

De façon similaire, une unique liaison logique (tunnel HCI ou liaison SPI) peut être établie pour chacun des autres domaines racines ISD-R2 et ISD-R3, cette unique liaison logique étant utilisée de façon classique pour gérer les profils dans ce domaine et pour transporter les échanges entre un profil actif P du domaine racine concerné et son MNO 130. Le recours à une unique liaison logique est illustré en **figure 12** décrite ci-après.

Dans l'exemple de la **figure 11****,** il est prévu une liaison logique (410_{ISRD2} ou 410_{ISDR3}) associée à chaque autre domaine racine ISD-R2 et ISD-R3 pour la gestion administrative des profils et prévu une liaison logique additionnelle (410-x) dédiée au profil actif Px dans chacun de ces autres domaines racines.

Dans un mode de réalisation, une ou plusieurs liaisons HCI/SWP, SPI et/ou ISO peuvent être combinées.

La **figure 12** illustre la même configuration que la **figure 11** dans un mode « fulll HCI/SWP » avec une unique liaison logique (tunnel HCI ou liaison SPI) établie pour chacun des domaines racines ISD-R1 à ISD-R3. Cette liaison par domaine racine est donc utilisée de façon classique pour transporter à la fois les messages de gestion administrative des profils et les échanges avec le MNO correspondant au profil P actif.

L'utilisation de portes ou services pré-assignés aux ressources de communication disponibles est applicable à l'ensemble des modes de réalisation des **figures 7** à **12****.**

## Revendications

1. Elément sécurisé (300) apte à coopérer avec un terminal hôte (200), l'élément sécurisé étant connecté au terminal hôte via une première liaison ISO (400) et via au moins une autre liaison physique (410, 420) distincte de la première liaison ISO (400), l'élément sécurisé comprenant un contrôleur d'interface de communication (305) pour communiquer avec le terminal hôte et comprenant une pluralité de profils d'abonnés (P), chaque profil d'abonné authentifiant un utilisateur dans un réseau de téléphonie mobile (100, 100'), et étant configuré pour activer simultanément plusieurs profils d'abonné, dans lequel le contrôleur d'interface de communication est configuré pour associer une pluralité de liaisons distinctes de communication (100, 410-1, 410-3, 410-4, 420-1, 420-3, 420-4) avec le terminal hôte aux plusieurs profils d'abonné actifs respectivement
**caractérisé en ce qu'**au moins une liaison de communication parmi la pluralité de liaisons distinctes de communication est établie au travers de ladite au moins une autre liaison physique (410, 420) distincte de la première liaison ISO (400).

2. Elément sécurisé (300) selon la revendication 1, dans lequel la pluralité de liaisons distinctes de communication comprend au moins une liaison logique établie au travers d'une interface de contrôleur d'hôte, HCl, sur une liaison physique (410) entre l'élément sécurisé (300) et le terminal hôte (200).

3. Elément sécurisé (300) selon la revendication 2, dans lequel une pluralité de liaisons logiques (410-1, 410-3, 410-4) établies au travers de l'interface HCI sur la liaison physique (410) est associée à une pluralité respective de profils d'abonné (P) actifs de l'élément sécurisé (300).

4. Elément sécurisé (300) selon la revendication 2 ou 3, dans lequel l'interface HCI est mise en oeuvre sur le protocole simple fil SWP entre le terminal hôte et l'élément sécurisé.

5. Elément sécurisé (300) selon la revendication 1 ou 2, dans lequel la pluralité de liaisons distinctes de communication comprend une, deux ou plus liaisons logiques (420-1, 420-3, 420-4) établies au travers d'une interface périphérique série SPI.

6. Elément sécurisé (300) selon la revendication 1 ou 2 ou 5, dans lequel la pluralité de liaisons distinctes de communication comprend une, deux ou plusieurs liaisons ISO (400) conforme à la norme ISO 7816.

7. Elément sécurisé (300) selon l'une des revendications 1 à 6, dans lequel le contrôleur d'interface de communication est configuré pour, lors de l'activation d'un profil, instancier un service de communication (Gᵢ) et établir une liaison de communication entre le service instancié et un service pré-assigné (gᵢ) du terminal hôte (200).

8. Elément sécurisé (300) selon l'une des revendications 1 à 7, configuré pour activer simultanément plusieurs profils d'abonné (P) gérés sous un même domaine de sécurité racine (ISD-R).

9. Elément sécurisé (300) selon l'une des revendications 1 à 7, dans lequel la pluralité de profils d'abonné (P) présents dans l'élément sécurisé est répartie sous la gestion de deux ou plus domaines de sécurité racines (ISD-R1, ISD-R2, ISD-R3), et l'élément sécurisé est configuré pour activer un seul profil d'abonné par domaine de sécurité racine à la fois.

10. Terminal hôte (200) comprenant un élément sécurisé (300) selon l'une des revendications 1 à 9, le terminal hôte comprenant un processeur bande de base (210) configuré pour associer une pluralité de liaisons distinctes de communication (100, 410-1, 410-3, 410-4, 420-1, 420-3, 420-4) avec l'élément sécurisé à une pluralité respective de profils d'abonné (P) actifs de l'élément sécurisé.

11. Terminal hôte (200) selon la revendication 10, comprenant, en outre, un contrôleur d'hôte de l'interface HCI mis en oeuvre dans un module de gestion CLF de communications sans contact (411),
et un processus hôte (s1, s3) du processeur bande de base (210) configuré pour établir, pour un profil d'abonné (P) actif, un tunnel (410-1, 410-3, 410-4) avec un service (S1, S3) gérant le profil d'abonné actif dans l'élément sécurisé, via le module de gestion CLF (411) agissant comme contrôleur d'hôte de l'interface HCl.

12. Terminal hôte (200) selon la revendication 10, dans lequel le processeur bande de base (210) est configuré pour établir une liaison maître-esclave pour chacun d'un ou plusieurs profils d'abonné actifs, avec une entité esclave dédiée prévue dans l'élément sécurisé.

13. Terminal hôte (200) selon la revendication 10, dans lequel une pluralité de services de communication (gᵢ) sont pré-assignés à une pluralité de ressources de communication sur un ou plusieurs réseaux de téléphonie mobile, et lesdites liaisons distinctes de communication sont établies à partir des services de communication pré-assignés de sorte que chaque profil d'abonné actif soit associé à une ressource de communication respective.

14. Procédé de contrôle de communication entre un terminal hôte (200) et un élément sécurisé (300) intégré dans le terminal hôte et comprenant une pluralité de profils d'abonnés (P), chacun authentifiant un utilisateur dans un réseau de téléphonie mobile (100, 100'), l'élément sécurisé étant connecté au terminal hôte via une première liaison ISO (400) et via au moins une autre liaison physique (410, 420) distincte de la première liaison ISO (400), le procédé comprenant :
l'établissement (44), pour chaque profil d'abonné actif (P) d'une pluralité de profils d'abonné simultanément actifs dans l'élément sécurisé, d'une liaison de communication (100, 410-1, 410-3, 410-4, 420-1, 420-3, 420-4) distincte entre le terminal hôte et l'élément sécurisé et
le routage (50-52, 65-67), dans le terminal hôte ou dans l'élément sécurisé, d'un flux de messages relatif à un profil d'abonné actif vers la liaison de communication établie pour ledit profil d'abonné actif,
**caractérisé en ce que**, pour au moins un profil d'abonné actif (P) parmi la pluralité de profils d'abonné simultanément actifs dans l'élément sécurisé, au moins une liaison de communication parmi la pluralité de liaisons distinctes de communication est établie au travers de ladite au moins une autre liaison physique (410, 420) distincte de la première liaison ISO (400).

15. Support d'informations lisible par un microprocesseur, comprenant des instructions d'un programme d'ordinateur pour mettre en oeuvre le procédé de la revendication 14, lorsqu'elles sont chargées et exécutées par le microprocesseur.

## Patentansprüche

1. Dokument (DC1), das Folgendes beinhaltet:
- einen Stapel (14) von Schichten, der mindestens eine obere Schicht (LY1), eine untere Schicht (LY3) und eine Innenschicht (LY2), die zwischen der oberen Schicht und der unteren Schicht eingefügt ist, umfasst, wobei die Innenschicht transparent oder transluzent ist, sodass ein Wellenleiter gebildet wird, um ein Licht (LG1) mit einem ersten Wellenlängenspektrum (SP1) durch die Innenschicht zu leiten,
wobei die Innenschicht zusammen mit der oberen Schicht und der unteren Schicht einen Rand (16) bildet, der eine Kontur des Stapels begrenzt; und
- ein Raster (20) aus Linsen (18); wobei das Dokument **dadurch gekennzeichnet ist, dass** die Linsen auf mindestens einem Teil des Randes (16) des Stapels (14) gebildet sind, wobei die Linsen entlang des Randes positioniert sind, um das Licht (LG1) mit dem ersten Wellenlängenspektrum, wenn es sich in der Innenschicht ausbreitet und dann durch den Rand (16) zur Außenseite des Dokuments austritt, zu fokussieren oder zu streuen, um auf dem Rand eine Reihe von Farbzonen (Z1, Z2) mit mindestens zwei unterschiedlichen Farben (C1, C2, C4) erscheinen zu lassen.

2. Dokument nach Anspruch 1, wobei:
- die obere Schicht (LY1) und die untere Schicht (LY3) opak sind; oder
- die obere Schicht (LY1) und die untere Schicht (LY3) einen Brechungsindex aufweisen, der kleiner als oder gleich dem der Innenschicht (LY2) ist.

3. Dokument nach Anspruch 1 oder 2, wobei das Raster (20) aus Linsen eine Sicherheitseinrichtung darstellt, die mindestens einen Teil des Randes (16) abdeckt, um, solange die Schichten nicht voneinander getrennt werden, die Unversehrtheit des Stapels (14) visuell zu bezeugen.

4. Dokument nach einem beliebigen der Ansprüche 1 bis 3, wobei die Linsen (18) jeweils so positioniert sind, dass sie anhand des farblichen Beitrags mindestens einer von der oberen Schicht (LY1), der Innenschicht (LY2) und der unteren Schicht (LY3) eine Gesamtfarbe in einer entsprechenden Zone des Randes (16) generieren, wobei die Farbe von der Blickrichtung (DI) abhängt.

5. Dokument nach einem beliebigen der Ansprüche 1 bis 4, wobei das Raster (20) aus Linsen (18) so konfiguriert ist, dass es eine sichtbare Farbänderung in den Zonen des Randes (16), die von den Linsen abgedeckt sind, bewirkt, wenn die Blickrichtung (DI) gegenüber den Linsen variiert wird.

6. Dokument nach einem beliebigen der Ansprüche 1 bis 5, wobei die Reihe von Farbzonen unabhängig von der Blickrichtung einen Wechsel aus mindestens zwei unterschiedlichen Farben auf dem Rand (16) bildet.

7. Dokument nach einem beliebigen der Ansprüche 1 bis 6, wobei die obere und die untere Schicht reflektierend sind, um das Licht (LG1) mit dem ersten Wellenlängenspektrum (SP1) in der Innenschicht (LY2) zu halten.

8. Dokument nach einem beliebigen der Ansprüche 1 bis 7, wobei jede Linse (18) des Linsenrasters so auf dem Rand (16) positioniert ist, dass ein einfallendes Licht, das von der Außenseite des Dokuments auf dem Rand empfangen wird, im Wesentlichen auf den Querschnitt nur einer von der unteren Schicht (LY3), der oberen Schicht (LY1) und der Innenschicht (LY2) fokussiert wird.

9. Dokument nach einem beliebigen der Ansprüche 1 bis 8, wobei die Linsen (18) durch Folgendes gebildet sind:
- eine Technik der Laserablation auf dem Rand (16) des Stapels; oder
- eine Technik des Laserschmelzens und Laserverdrängens des Materials des Stapels (14), um die Linsen auf dem Rand (16) des Stapels zu bilden.

10. Dokument nach einem beliebigen der Ansprüche 1 bis 9, wobei die untere Schicht oder die obere Schicht eine Öffnung (30) beinhaltet, durch die die Innenschicht (LY2) ein Erregungslicht (LG2) mit einem zweiten Wellenlängenspektrum (SP2), das sich von dem ersten Wellenlängenspektrum (SP1) unterscheidet, empfangen kann,
wobei die Innenschicht einen Zusatzstoff (32) beinhaltet, der Licht (LG1) mit dem ersten Wellenlängenspektrum (SP1) emittiert, wenn der Zusatzstoff dem Erregungslicht (LG2) ausgesetzt wird.

11. Dokument nach einem beliebigen der Ansprüche 1 bis 10, wobei das Dokument eine intrinsische Lichtquelle (34) beinhaltet, die dazu konfiguriert ist, Licht mit dem ersten Wellenlängenspektrum in der Innenschicht zu emittieren.

12. Dokument nach Anspruch 11, wobei das Dokument (DC1) in oder auf dem Stapel (14) mindestens eine LED (30) beinhaltet, die als intrinsische Lichtquelle dient, um Licht mit dem ersten Wellenlängenspektrum in der Innenschicht zu emittieren,
wobei das Dokument ferner eine RF-Antenne (40) in oder auf dem Stapel beinhaltet, um die mindestens eine LED mittels eines Stroms (I), der durch die Erregung eines elektromagnetischen Feldes (FL) induziert wird, elektrisch zu versorgen.

13. Dokument nach einem beliebigen der Ansprüche 1 bis 12, wobei auf einer oberen Seite des Stapels (14) oder auf einer unteren Seite (S2) des Stapels in der Nähe des Randes (16) eine Reihe von Symbolen (42) gebildet ist, wobei das Linsenraster (20) mindestens eine Linse (18) auf dem Rand beinhaltet, die zu jedem Symbol (42) ausgerichtet ist, um ein visuelles Muster (C1, C2), das mit jedem Symbol assoziiert ist, mit Hilfe des Lichts (LG1) mit dem ersten Wellenlängenspektrum (S1) erscheinen zu lassen, wenn sich dieses in der Innenschicht (LY2) ausbreitet und dann durch den Rand (16) zur Außenseite des Dokuments (DC1) austritt.

14. Dokument nach Anspruch 13, wobei jedes visuelle Muster, das durch das Linsenraster (20) generiert wird, einem Entsprechungscode entspricht, der ein visuelles Muster mindestens einer jeweiligen physischen Eigenschaft eines Symbols oder einem jeweiligen Symboltyp zuordnet.

15. Dokument nach einem beliebigen der Ansprüche 1 bis 14, wobei die Linsen (18) des Linsenrasters (20) in Aussparungen (45), die in dem Rand (16) des Stapels gebildet sind, angeordnet sind, wobei die Dicke (e1) jeder Linse kleiner als die Tiefe (e2) der jeweiligen Aussparung ist, um die Linsen mechanisch zu schützen.

## Claims

1. Document (DC1), comprising:
- a stack (14) of layers comprising at least one upper layer (LY1), one lower layer (LY3) and one inner layer (LY2) which is interposed between the upper layer and the lower layer, the inner layer being transparent or translucent so as to form a waveguide to guide light (LG1) in a first wavelength spectrum (SP1) through the inner layer,
the inner layer forming, collectively with the upper layer and the lower layer, an edge (16) which delimits an outline of the stack;
and
- an array (20) of lenses (18);
the document being **characterized in that** the lenses are formed on at least part of the edge (16) of the stack (14), said lenses being positioned along the edge in order to make the light (LG1) in the first wavelength spectrum converge or diverge when it propagates through the inner layer until it emerges from the document through said edge (16), so as to make a series of coloured zones (Z1, Z2) of at least two distinct colours (C1, C2, C4) appear on the edge.

2. Document according to Claim 1, in which:
- the upper layer (LY1) and the lower layer (LY3) are opaque;
or
- the upper layer (LY1) and the lower layer (LY3) have a refractive index which is lower than or equal to that of the inner layer (LY2).

3. Document according to Claim 1 or 2, in which the array (20) of lenses constitutes a security device covering at least part of the edge (16) in order to visually demonstrate the integrity of the stack (14) so long as said layers are not separated from one another.

4. Document according to any one of Claims 1 to 3, in which the lenses (18) are each positioned in order to generate, in a corresponding zone of the edge (16), an overall colour on the basis of the colorimetric contribution of at least one among the upper layer (LY1), the inner layer (LY2) and the lower layer (LY3), said colour being dependent on the observation direction (DI).

5. Document according to any one of Claims 1 to 4, in which the array (20) of lenses (18) is configured so as to cause a change in colour which can be viewed in the zones of the edge (16) which are covered by the lenses by varying the observation direction (DI) with respect to said lenses.

6. Document according to any one of Claims 1 to 5, in which the series of coloured zones forms an alternation of at least two distinct colours on the edge (16), whatever the observation direction.

7. Document according to any one of Claims 1 to 6, in which the upper and lower layers are reflective so as to confine the light (LG1) in the first wavelength spectrum (SP1) to the inner layer (LY2).

8. Document according to any one of Claims 1 to 7, in which each lens (18) of the array of lenses is positioned on the edge (16) so as to make incident light, received on the edge from outside the document, converge essentially on the section of only one among the lower layer (LY3), the upper layer (LY1) and the inner layer (LY2) .

9. Document according to any one of Claims 1 to 8, in which the lenses (18) are formed:
- by a technique of laser ablation on the edge (16) of the stack;
or
- by a technique of laser melting and upflow of the material of the stack (14) so as to form the lenses on the edge (16) of said stack.

10. Document according to any one of Claims 1 to 9, in which the lower layer or the upper layer comprises an opening (30) through which the inner layer (LY2) is able to receive excitation light (LG2) in a second wavelength spectrum (SP2) which is different from the first wavelength spectrum (SP1),
the inner layer comprising an additive (32) which emits light (LG1) in the first wavelength spectrum (SP1) when said additive is exposed to the excitation light (LG2).

11. Document according to any one of Claims 1 to 10, in which the document comprises an intrinsic light source (34) configured to emit light in the first wavelength spectrum through the inner layer.

12. Document according to Claim 11, in which the document (DC1) comprises, in or on the stack (14), at least one LED (30) acting as an intrinsic light source in order to emit light in the first wavelength spectrum through the inner layer,
the document further comprising an RF antenna (40) in or on said stack in order to supply electric power to said at least one LED by means of a current (I) which is induced under excitation from an electromagnetic field (FL) .

13. Document according to any one of Claims 1 to 12, in which a series of symbols (42) is formed on an upper face of the stack (14) or on a lower face (S2) of the stack, in the vicinity of the edge (16),
the array (20) of lenses comprising at least one said lens (18) on the edge aligned with each symbol (42) so as to make a visual pattern (C1, C2) appear which is associated with each symbol on the basis of the light (LG1) in the first wavelength spectrum (S1) when it propagates through the inner layer (LY2) until it emerges from the document (DC1) through said edge (16).

14. Document according to Claim 13, in which each visual pattern generated by the array (20) of lenses is in accordance with a match code which associates a visual pattern with at least one respective physical characteristic of a symbol or with a respective type of symbol.

15. Document according to any one of Claims 1 to 14, in which the lenses (18) of the array (20) of lenses are arranged in notches (45) formed on the edge (16) of the stack, the thickness (e1) of each lens being lower than the depth (e2) of the respective notch so as to mechanically protect said lenses.
